Europäisches Patentamt

European Patent Office

Office européen des brevets

(19)

(11) Veröffentlichungsnummer: **0 050 259**
A2

(12) # EUROPÄISCHE PATENTANMELDUNG

(21) Anmeldenummer: 81107915.1

(22) Anmeldetag: 05.10.81

(51) Int. Cl.³: **B 07 B 13/00**, B 29 C 29/00, D 21 B 1/08

(30) Priorität: 20.10.80 DE 3039547

(43) Veröffentlichungstag der Anmeldung: 28.04.82
Patentblatt 82/17

(84) Benannte Vertragsstaaten: AT CH FR GB IT LI NL SE

(71) Anmelder: Voelskow, Peter, Brunnenstrasse 10, D-5439 Bretthausen (DE)

(72) Erfinder: Voelskow, Peter, Brunnenstrasse 10, D-5439 Bretthausen (DE)

(54) Verfahren und Einrichtungen zum Aussortieren von Kunststoff-Follen aus einem Abfallgemisch.

(57) Verfahren und Einrichtungen zum Aussortieren von Kunststoff-Folien aus einem Abfallgemisch, aus dem vorher Schwergutteile wie Steine, Glas, Eisen usw. aussortiert worden sind.

Das Abfallgemisch wird unter Anwendung einer mäßigen Vorschubkraft in entgegengesetzter Bewegungsrichtung an spitzen Stacheln, beispielsweise auch Stachelwalzen, mittels Besen oder Bürsten vorbeigefördert.

Kunststoff-Folien mit höherer Reißfestigkeit bleiben an den Stacheln hängen und werden durch einen Spalt in einer schräg nach unten geneigten Rutsche auf die Rückseite dieser Rutsche gezogen und dort von gegensinnig mit höherer Geschwindigkeit rotierenden Abkämmwalzen wieder von den Stacheln gelöst und nach unten abgeworfen.

Teile mit geringer Reißfestigkeit, wie Papier, und Teile, die nicht aufgespießt werden, wie Leder, Pappe, Holzbrettchen, dickwandigere Kunststoffabfälle usw., werden von den Besen oder Bürsten über die schräg nach unten geneigte Rutsche weitergefördert.

Verfahren und Einrichtungen zum Aussortieren von
Kunststoff-Folien aus einem Abfallgemisch.

B e s c h r e i b u n g

Die Erfindung betrifft ein Verfahren sowie Einrichtungen zum
Aussortieren von Kunststoff-Folien aus einem Abfallgemisch,
dem vorher zumindest Schwergut-Teile wie Steine, Glas, Eisen
etc. entzogen worden sind.

Die Erfindung geht von der DE-OS 28 23 537 aus. In dieser
Veröffentlichung wird eine Anlage zur Trennung von folienartigen Plastikmaterialien von Papier beschrieben, bei der
durch Nutzbarmachung der kombinierten Wirkung der Drehung
einer Haspel und einer gleichsinnigen Vorschubbewegung eines
vorwiegend mit Papier- und Plastikmaterialien beladenen Förderbandes zwecks Trennung des vom Förderband geförderten
Materials in 2 Materialarten, undzwar in eine mehr biegsame
Materialart und eine weniger biegsame Materialart angewendet
wird, wobei die mehr biegsamen Plastikmaterialien von den
Armen der Haspel erfaßt werden.

An weiteren Stellen dieser Druckschrift werden jene Arme der
Haspel als hakenförmig gebogene Stifte beschrieben und bezeichnet.

Die Wirkung soll offenbar derart von statten gehen, daß die
etwa stachel- oder hakenförmigen Arme der Haspel bei gleich-

förmiger Bewegungsrichtung über einem mit Abfallgemisch
beladenem Förderband die Plastik-Folien aufspießen und
hochfördern, während das steifere, weniger bewegliche
Papier auf dem Förderband liegen bleibt. Möglicherweise
sollen auch lediglich durch die hakenförmigen Arme an
der Haspel die flexiblen Plastik-Folien erfaßt und hochgefördert werden, während die steiferen Papierblätter
zwischen den Armen der Haspel herunterfallen und auf dem
Förderband verbleiben.

Im ersten angenommenen Funktionsfall, wenn die Plastik-
Folien aufgespießt werden, wird es kaum vermeidbar sein
auch Papiere durch spitzere Haken oder Arme aufzuspießen
und gemeinsam mit den Plastik-Folien durch die Haspel
von dem Gemisch auf dem Förderband auszutragen.

Im zweiten angenommenen Falle, wenn nur die extreme
Flexibilität von Plastik-Folien oder auch Textilfetzen
genutzt werden soll, um sie durch Arme oder Haken der
Haspel aus dem Abfallgemisch herauszufischen und hoch zu
fördern, wird es ebenfalls sehr schwer möglich sein, hierbei sozusagen alle Papier "abzuschütteln" bzw. nicht durch
die Haken oder Arme der Haspel zu erfassen.

Diese bekannte Vorrichtung dürfte sich deshalb bestenfalls
dazu eignen, ein mit Plastik-Folien und Textilabfällen angereichertes Gemisch aus dem vorherigen Gemisch auf dem
Förderband auszutragen.

Die Aufgabe der Erfindung liegt darin, eine derart mechanische Folien-Trennanlage so zu verbessern, daß die ausgetragenen Plastik-Folien und ggf. Textilabfälle möglichst
frei von Verunreinigungen durch Papier und andere Abfallbestandteile sind.

Die Erfindung löst die Aufgabe durch ein Verfahren zum Aussortieren von Kunststoff-Folien aus einem Abfallgemisch, dem
vorher zumindest Schwergut-Teile wie Steine, Glas, Eisen etc.
entzogen worden sind, wobei das Abfallgemisch in dünner
Schicht unter Anwendung einer mäßigen Förderkraft durch
Besen oder Bürsten so an Stacheln vorbei geführt wird, daß
nur Teile mit höherer Reißfestigkeit an den Stacheln hängen
bleiben, während Teile mit geringerer Reißfestigkeit wie Papier an den Stacheln einreißen und mit den Teilen, die nicht
von den Stacheln erfaßt werden wie Leder, Pappe, Holz etc.
und die über die Stacheln hinweg gleiten, von den Besen oder
Bürsten weiter gefördert werden.

Es ist zwar ebenfalls bekannt, die unterschiedliche Reißfestigkeit von Papier einerseits und Plastik-Folien andererseits zur mechanischen Aussortierung von Plastik-Folien dadurch auszunutzen, daß ein Gemisch aus Papier und Folien
durch einen Trägergasstrom an mit Stacheln besetzten Vorrichtungen vorbei geführt wird. (DE-OS 26 23 067) Bei diesem
bekannten Verfahren muß jedoch zuvor das Abfallgemisch durch
einen Windsichter in ein leichtes, flugfähiges Gut aus Papier
und Plastik-Folien getrennt werden, was den Aufwand der Anlage erheblich erhöht. Außerdem ist der Aufwand erheblich,
das Leichtgutgemisch aus Papieren und Folien mit einem Trägergasstrom an den Stacheln z.B. einer Stachelwalze vorbei zu

führen, hierzu sind Gebläse mit hoher Antriebsleistung und anschließend Zyklonabscheider zur Trennung des Trägergasstromes von den Abfüllen erforderlich.

Dem gegenüber ist das Verfahren und die zur Ausübung desselben angewandten Einrichtungen ebenso einfach und unkompliziert wie das anfänglich zitierte Verfahren mit einfachen Haspeln über einem Förderband, es gestattet jedoch durch Ausnützung der unterschiedlichen Reißfestigkeit von Folien und Papier eine wesentlich exaktere Trennung dieser beiden Komponenten ebenso wie das zuletzt zitierte Verfahren mit der Bewegung des Abfallgemisches durch einen Trägergasstrom.

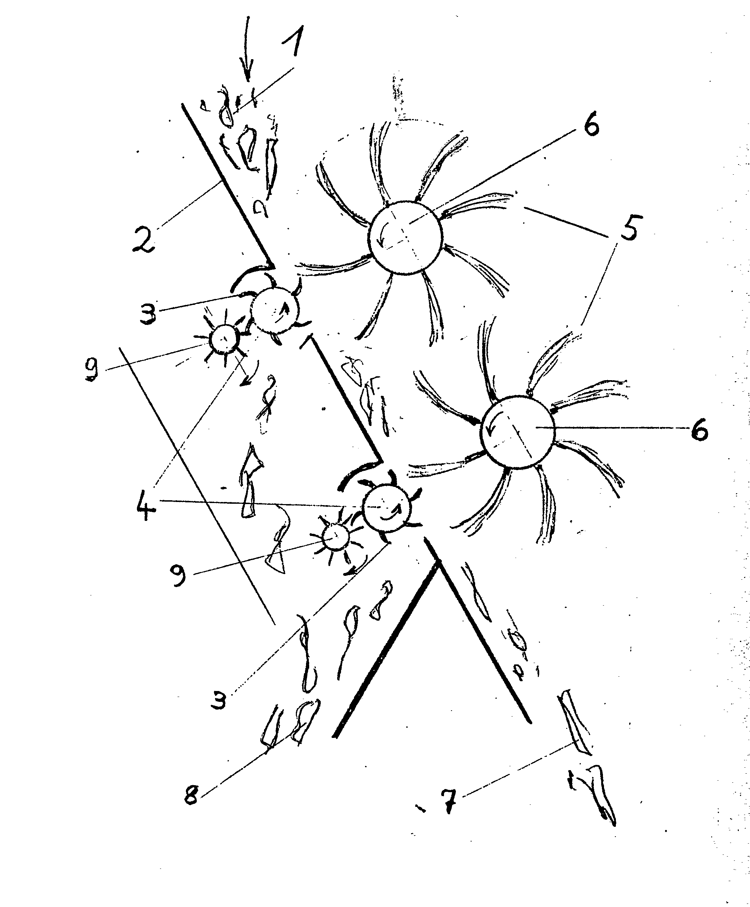

Die Figur zeigt ein Schemabeispiel für eine erfindungsgemäße Einrichtung mit Bürstenwalzen. Das Abfallgemisch 1 gelangt von beliebigen mechanischen Fördermitteln, beispielsweise einem Förderband oder einer Schwingförderrinne auf die schräg nach unten geneigte Rutsche 2, die von einer oder mehreren, mit Stacheln 3 besetzten Walzen 4 quer zur Fließrichtung des herabrutschenden Abfallgemisches 1 durchdrungen wird. Parallel zu den Stachelwalzen 4 sind über diesen mit Sreifenbürsten 5 streifenförmigen Haarbesen oder dergleichen besetzte Bürstenwalzen 6 angeordnet, die das Abfallgemisch 1 über die Stacheln 3 der Stachelwalzen 4 hinweg fördern.

Je mehr derartige Walzenpaarungen bestehend aus Stachelwalze 4 und Bürstenwalze 6 untereinander an der Rutsche 2 angeordnet werden, desto sauberer wird der Trenneffekt. Am unteren Ende der Rutsche 2 besteht das Abfallgemisch 7 dann nur noch aus allen Reststoffen ohne die in eine andere Richtung abgeförderten Kunststoff-Folien und ggf. Textilabfälle 8.

Zum Lösen der auf den Stacheln 3 der Stachelwalzen 4 aufgespießten Folien können mit den Stacheln 3 kämmende,
schneller umlaufende Abkämmwalzen 9, z.B. Stachelwalzen
oder Bürstenwalzen dienen. Die Stacheln dieser Abkämmwalzen 9 sind stumpf ausgebildet und die Drehzahl der Abkämmwalzen 9 ist so hoch, daß alle Teile von diesen
stumpfen Stacheln abgeschleudert werden.

An Stelle der Bürstenwalzen 6 kann auch ein umlaufendes
Förderband angewendet werden, das parallel zu der Rutsche 2
angeordnet ist und auf dem quer zur Förderrichtung Streifenbürsten, streifenförmige Besen oder dergleichen befestigt
sind.

Die ERfindung beschränkt sich nicht auf dieses dargestellte
Beispiel, es können beliebig und an beliebigen Elementen
angeordnete Stacheln verwendet werden, die sich gegenläufig
zur Förderrichtung einer Anordnung von Besen oder Bürsten
bewegen.

0050259

Verfahren und Einrichtungen zum Aussortieren von
Kunststoff-Folien aus einem Abfallgemisch.

# PATENTANSPRÜCHE

1. Verfahren zum Aussortieren von Kunststoff-Folien aus einem
   Abfallgemisch, dem vorher zumindest Schwergut-Teile wie
   Steine, Glas, Eisen etc. entzogen worden sind und wobei das
   Abfallgemisch an Armen oder Haken einer Haspel bei gleicher
   Bewegungsrichtung so vorbeigeführt wird, daß Folien oder
   Textilabfälle ausgetragen und steifere Teile wie Papier
   nicht erfaßt werden dadurch gekennzeichnet, daß das Abfallgemisch (1) in dünner Schicht unter Anwendung einer mäßigen
   Vorschubkraft in entgegengesetzter Bewegungsrichtung so an
   spitzen Stacheln (3) mittels Besen oder Bürsten (5) vorbeigefördert wird, daß nur Teile mit höherer Reißfestigkeit an
   den Stacheln (3) hängen bleiben, während Teile mit geringerer
   Reißfestigkeit wie Papier oder Teile, die nicht aufgespießt
   werden, wie Leder, Pappe, Holzbrettchen, dickwandigere Kunststoffabfälle etc. von den Besen oder Bürsten (5) weiter gefördert werden.

2. Einrichtung zur Ausübung des Verfahrens nach Anspruch 1 dadurch gekennzeichnet, daß zur Förderung des Abfallgemisches
   (1) über eine oder mehrere mit Stacheln (3) besetzte Stachelwalzen (4)eine oder mehrere Bürstenwalzen (6) verwendet werden.

3. Einrichtung zur Ausübung des Verfahrens nach Anspruch 1 dadurch gekennzeichnet, daß zur Förderung des Abfallgemisches über eine oder mehrere Stachelwalzen (4) ein quer zur Förderrichtung mit Streifenbürsten oder streifenförmigen Haarbesen bestücktes Förderband dient.

4. Einrichtung nach den Ansprüchen 2 und 3 dadurch gekennzeichnet, daß den Stachelwalzen (4) gegensinnig mit höherer Geschwindigkeit rotierende Abkämmwalzen (9) zugeordnet sind.

5. Einrichtung nach den Ansprüchen 2 bis 4 dadurch gekennzeichnet, daß die Stachelwalzen (4) den querverlaufenden Spalt einer schräg nach unten geneigten Rutsche (2) im wesentlichen nur mit ihren Stacheln (3) durchdringen.

1|1